# EUROPEAN PATENT APPLICATION

(11) **EP 2 802 169 A1**
(43) Date of publication of application: **12.11.2014**
(21) Application number: 12864617.1
(22) Date of filing: 03.05.2012
(51) Int. Cl.: H04W 28/06

(54) **CROSS-LAYER COLLABORATION METHOD AND SYSTEM FOR COGNITIVE RADIO NETWORK**

(30) Priority: 04.01.2012 CN 201210001001
(71) Applicant: ZTE Corporation, Shenzhen, Guangdong 518057 (CN)
(72) Inventor: WANG, Man, Shenzhen Guangdong 518057 (CN)
(74) Representative: Brevalex
(86) International application number: PCT/CN2012/075047
(87) International publication number: WO 2013/102334

(57) **Abstract**

A cross-layer collaboration method and a cross-layer collaboration system for a Cognitive Radio Network (CRN) are disclosed. The method includes: determining a transmission quality criterion (101); determining an ultimately working layer required for the transmission, and uniformly transmitting to the ultimately working layer the information of each layer required for determining transmission solutions (102); on the ultimately working layer, and according to the information of each layer, selecting the transmission solutions satisfying the transmission quality criterion (103); and evaluating the selected transmission solutions, determining an optimum solution according to the evaluation result, and transmitting data on the ultimately working layer by the optimum solution (104). The disclosure solves the drawback that the traditional cross-layer design solution only emphasizes single target optimization but neglects the overall network performance, thus avoiding the mutual conflict between multiple self-adaptive processes.

## Description

### TECHNICAL FIELD

The disclosure relates to the field of radio communications, and in particular to a cross-layer collaboration method and a cross-layer collaboration system for a Cognitive Radio Network (CRN).

### BACKGROUND

In the hierarchical design of the traditional network, each layer of the protocol stack is designed and operates independently. Instead of designing a single huge protocol to regulate complete details of all forms of communications, network protocol designers only need to divide communication problems into multiple layers and then design a relative independent protocol for each layer. This process enables the design, analysis, time limit and testing of each protocol easier. A main principle of dividing protocols is to ensure a target system to be effective and efficient, thus simplifying the difficulty of network protocol development and implementation.

However, in a radio network, uncertain factors of a radio communication environment lead to time-variation characteristics of radio channel capacity and bit error rate. The traditional hierarchical design considers the wired network and does not consider the time-variation characteristics of the radio environment, which makes the strict hierarchical design not suitable for the radio network. In addition, the protocol stack based on the traditional strict hierarchical design can perform communication between adjacent layers in a fixed way only, this makes it harder for the protocol stack to perform overall management on radio resources and leads to difficulty in the whole optimization of network performances.

### SUMMARY

In view of the above, a main purpose of the disclosure is to provide a cross-layer collaboration method and a cross-layer collaboration system for a CRN, to realize the cross-layer collaboration of the radio network.

To this end, the technical solution of the disclosure is as follows.

The disclosure provides a cross-layer collaboration method for a CRN, which includes:
determining a transmission quality criterion;
determining an ultimately working layer required for the transmission, and uniformly transmitting to the ultimately working layer the information of each layer required for determining transmission solutions;
selecting the transmission solutions satisfying the transmission quality criterion according to the information of each layer on the ultimately working layer; and
evaluating the selected transmission solutions, determining an optimum solution according to the evaluation result, and transmitting data on the ultimately working layer by the optimum solution.

The method further includes:
when there is only one transmission solution satisfying the transmission quality criterion, determining this transmission solution as the optimum solution;
when there are multiple transmission solutions satisfying the transmission quality criterion, evaluating the multiple transmission solutions according to a preset evaluation criterion, and selecting the transmission solution with the optimum evaluation result to transmit data.

The principle of designing the evaluation criterion is to enable the highest transmission efficiency of the entire network.

The method further includes: determining the ultimately working layer required for the transmission from an Open System Interconnect (OSI) model.

The disclosure provides a cross-layer collaboration system for a CRN, which includes: a criterion determination module, an information uniform transmission module, a solution selection module and an evaluation transmission module, wherein
the criterion determination module is configured to determine a transmission quality criterion;
the information uniform transmission module is configured to determine an ultimately working layer required for the transmission and to uniformly transmit to the ultimately working layer the information of each layer required for determining transmission solutions;
the solution selection module is configured to select the transmission solutions satisfying the transmission quality criterion according to the information of each layer on the ultimately working layer; and
the evaluation transmission module is configured to evaluate the selected transmission solutions, to determine an optimum solution according to the evaluation result and to transmit data on the ultimately working layer by the optimum solution.

The evaluation transmission module further is configured to:
when there is only one transmission solution satisfying the transmission quality criterion, determine this transmission solution as the optimum solution;
when there are multiple transmission solutions satisfying the transmission quality criterion, evaluate the multiple transmission solutions according to a preset evaluation criterion, and select the transmission solution with the optimum evaluation result to transmit data.

The principle of designing the evaluation criterion is to enable the highest transmission efficiency of the entire network.

The information uniform transmission module is further configured to determine the ultimately working layer required for the transmission from an OSI model.

The cross-layer collaboration method and system for a CRN provided by the disclosure can exchange information or share internal information between non-adjacent layers and make full use of the information of each layer to coordinate the work between each layer, so as to adapt to the time-variation characteristics of a radio channel, to realize overall management and optimization configuration of resources and to enable the system to meet different requirements of various services.

The disclosure not only commits to the single target optimization of a radio network, but also solves the drawback that the traditional cross-layer design solution only emphasizes the single target optimization but neglects the overall network performance, thus avoiding the mutual conflict between multiple self-adaptive processes. The disclosure can be compromised among multiple targets, realizes multi-target optimization, and enables the overall optimization of network performances while implementing the single target optimization.

### BRIEF DESCRIPTION OF THE DRAWINGS

Fig. 1 is a flowchart of a cross-layer collaboration method for a CRN according to the disclosure;
Fig. 2 is a flowchart of a cross-layer collaboration method for spectrum detection and spectrum allocation according to an embodiment of the disclosure;
Fig. 3 is a flowchart of a cross-layer collaboration method for spectrum allocation and routing according to an embodiment of the disclosure; and
Fig. 4 is a structure diagram of a cross-layer collaboration system for a CRN according to the disclosure.

### DETAILED DESCRIPTION

The technical solution of the disclosure is further elaborated below in combination with the accompanying drawings and specific embodiments.

In view of the defect of the hierarchical design of the traditional radio network, the disclosure provides a cross-layer design for a radio network. The cross-layer design means exchanging information or sharing internal information between non-adjacent layers, which goes against the idea of the traditional strict hierarchy. In the traditional strict hierarchical network, layers are mutually independent, overall network design requirements and correlation between each protocol layer are neglected, and information sharing is difficult to be realized. Since a CRN needs to determine an optimum network and reconstruct a network element stack protocol according to the comprehensive information of the current environment, the CRN must adopt a cross-layer architecture based on application and network features. By adopting the cross-layer design, transmission and sharing of information can be realized between layers, the information of each layer can be fully used to coordinate the work between each layer, so as to adapt to the time-variation characteristics of radio channel and to realize the optimization configuration of resources. The cross-layer design breaks the constraint of the strict hierarchy of the traditional OSI model, coordinates the work between each layer of the protocol stack by transmitting specified information between each layer of the protocol stack and adapts to the radio communication environment, thereby enabling the system to meet different requirements of various services. The core of the cross-layer design is to enable the protocol stack to realize a self-adaptive optimization configuration of resources according to the changes of the radio environment. The cross-layer design does not mean giving up hierarchy, but views the radio network as a whole to design, and uses correlative dependence and impact between layers.

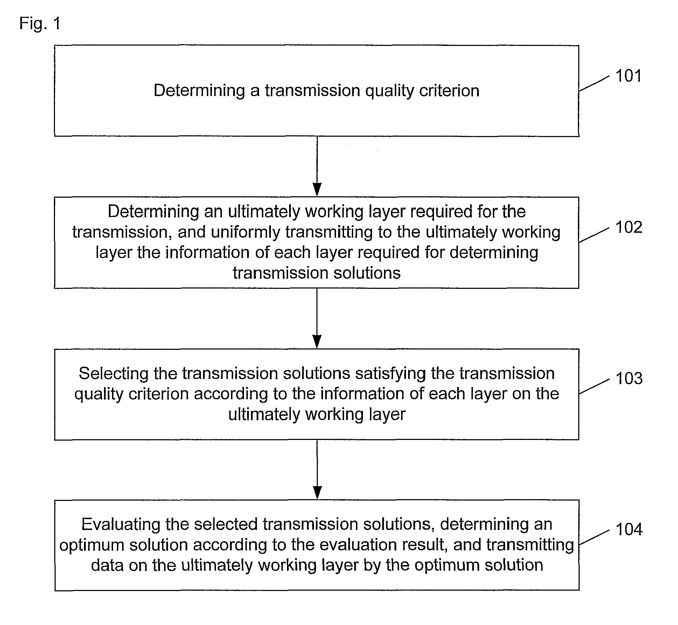

Based on the above idea, the disclosure provides a cross-layer collaboration method for a CRN as shown in Fig. 1, which mainly includes the following steps:
Step 101: Determining a transmission quality criterion.

After the connection of Radio Resource Control (RRC), data transmission can be performed between a base station and a terminal. When the base station or terminal transmits data, the base station or an upper layer (a layer above the data transmission layer) issues a transmission quality criterion according to the congestion condition, channel condition and spectrum allocation condition of the network.

The transmission quality criterion specifically includes some parameters that are used to represent transmission quality, for example, Quality of Service (QoS) parameter.

Step 102: Determining an ultimately working layer required for the transmission according to service information and network actual requirements, and uniformly transmitting to the ultimately working layer the information of each layer required for determining transmission solutions.

The ultimately working layer required for the transmission is determined from an OSI model. The ultimately working layer in the OSI model is one layer in the traditional seven-layer model (including application layer, presentation layer, session layer, transport layer, network layer, link layer and physical layer, each of which has a determinate target and a determinate function); after the ultimately working layer is determined, the information required for determining transmission solutions is transmitted to the ultimately working layer from other layers.

Step 103: Selecting the transmission solutions satisfying the transmission quality criterion according to the information of each layer on the ultimately working layer.

Take the QoS parameter being the transmission quality criterion as an example, the transmission solutions satisfying QoS are selected according to the information of each layer on the ultimately working layer.

Step 104: Evaluating the selected transmission solutions, determining an optimum solution according to the evaluation result, and transmitting data on the ultimately working layer by the optimum solution.
when there is only one transmission solution satisfying the transmission quality criterion, this transmission solution is determined as the optimum solution, and data is transmitted on the ultimately working layer by this transmission solution.
when there are multiple transmission solutions satisfying the transmission quality criterion, the multiple transmission solutions are evaluated according to a preset evaluation criterion, and the transmission solution with the optimum evaluation result is selected to transmit data. The principle of designing the evaluation criterion is to enable the highest transmission efficiency of the entire network, for example, an evaluation criterion of minimum time delay, an evaluation criterion of shortest transmission time, an evaluation criterion of minimal route, and an evaluation criterion of minimum required timeslot.

The above cross-layer collaboration method for a CRN is further elaborated below in combination with specific embodiments.

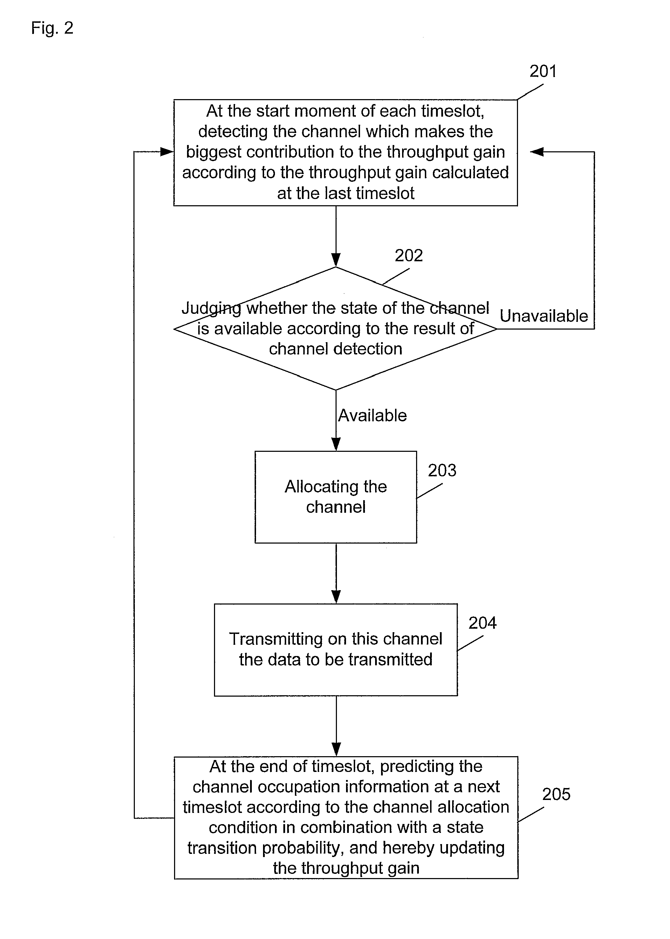

Embodiment 1 of the disclosure is a cross-layer collaboration method for the spectrum detection of the physical layer and the spectrum allocation of the Media Access Control (MAC) layer, wherein the MAC layer belongs to the link layer; as shown in Fig. 2, the method mainly includes the following steps:
Step 201: Determining a throughput gain as the transmission quality criterion of the cross-layer collaboration; through the joint design of the physical layer and the MAC layer, at the start moment of each timeslot, selecting to detect the channel of which the system throughput brings a maximum gain according to the throughput gain of the detection and allocation joint-policy calculated at the last timeslot.
Step 202: Judging whether the state of the channel is available according to the result of channel detection; if available, executing Step 203; otherwise, returning to Step 201.
Step 203: Allocating the channel (that is, the channel with state detected available).
Step 204: Transmitting on this channel the data to be transmitted.
Step 205: At the end of timeslot, predicting the channel occupation information at a next timeslot according to the channel allocation condition in combination with a state transition probability, and hereby updating the throughput gain.

Embodiment 2 of the disclosure is a cross-layer collaboration method for spectrum allocation and routing. In the joint design of the spectrum allocation of the MAC layer and the routing of the network layer, each source node finds all possible alternative routes through a standard route discovery process; for each alternative route, all possible spectrum allocation solutions are found. For each combination of route and spectrum, the optimum conflict-free scheduling solution is executed. Therefore, the optimization of a single target is realized, the overall performance of the network is considered and the optimization of multiple targets is realized too.

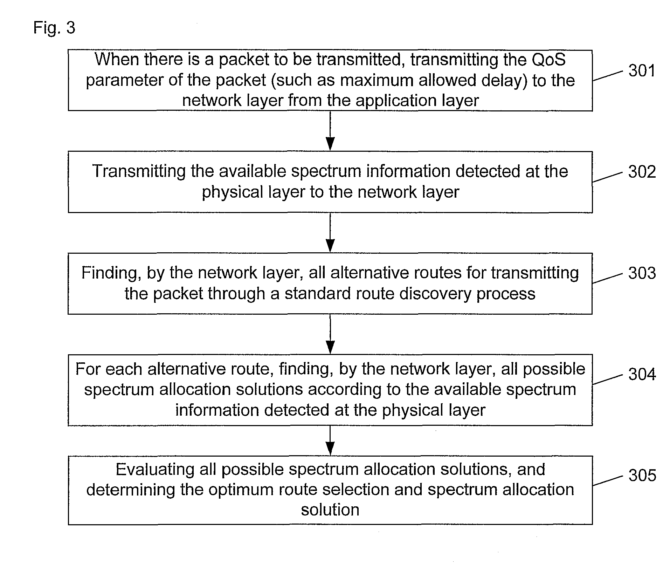

A cross-layer collaboration method for spectrum allocation and routing in combination of QoS requirement, as shown in Fig. 3, mainly includes the following steps:
Step 301: When there is a packet to be transmitted, transmitting the QoS parameter of the packet (such as maximum allowed delay) to the network layer from the application layer.
Step 302: Transmitting the available spectrum information detected at the physical layer to the network layer.
Step 303: Finding, by the network layer, all alternative routes for transmitting by the packet through a standard route discovery process.
Step 304: For each alternative route, finding, by the network layer, all possible spectrum allocation solutions according to the available spectrum information detected at the physical layer.
Step 305: with respect to the combination of route selection and spectrum allocation for transmitting each packet, calculating, by the network layer, the transmission parameters of the packet on this route, such as transmission time, accuracy rate and the like, according to the transmission rate and packet error rate provided by the physical layer and the MAC layer.

In all the combinations of route selection and spectrum allocation meeting the requirement of maximum allowed delay, the combination with minimum transmission time is found using the minimum delay routing algorithm, to serve as the optimum route selection and spectrum allocation solution for the transmission of the packet.

This spectrum allocation solution meets the QoS requirement of maximum allowed delay of the application layer and enables the minimum end-to-end delay of packet transmission. This cross-layer collaboration method makes a joint design on the application layer, the network layer, the MAC layer and the physical layer, makes the QoS requirement of maximum allowed delay of the application layer as the routing judgment criterion, and obviously improves the transmission of delay-sensitive services in the CRN in combination with the minimum delay routing algorithm.

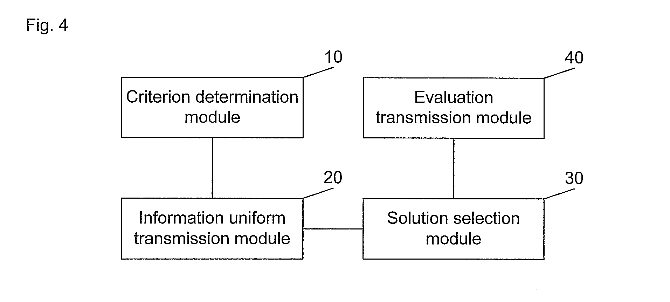

Corresponding to the cross-layer collaboration method for a CRN, the disclosure also provides a cross-layer collaboration system for a CRN, which as shown in Fig. 4 mainly includes: a criterion determination module 10, an information uniform transmission module 20, a solution selection module 30 and an evaluation transmission module 40, wherein
the criterion determination module 10 is configured to determine a transmission quality criterion;
the information uniform transmission module 20 is configured to determine an ultimately working layer required for the transmission and to uniformly transmit to the ultimately working layer the information of each layer required for determining transmission solutions; the information uniform transmission module 20 is further configured to determine the ultimately working layer required for the transmission from an OSI model;
the solution selection module 30 is configured to select the transmission solutions satisfying the transmission quality criterion according to the information of each layer on the ultimately working layer; and
the evaluation transmission module 40 is configured to evaluate the selected transmission solutions, to determine an optimum solution according to the evaluation result and to transmit data on the ultimately working layer by the optimum solution.

The transmission quality criterion can be throughput gain, QoS or maximum allowed delay requirement and the like, which is determined according to actual conditions.

Preferably, the evaluation transmission module 40 further is configured to: when there is only one transmission solution satisfying the transmission quality criterion, determine this transmission solution as the optimum solution;
when there are multiple transmission solutions satisfying the transmission quality criterion, evaluate the multiple transmission solutions according to a preset evaluation criterion, and select the transmission solution with the optimum evaluation result to transmit data. The principle of designing the evaluation criterion is to enable the highest transmission efficiency of the entire network, for example, an evaluation criterion of minimum time delay, an evaluation criterion of shortest transmission time, an evaluation criterion of minimal route, and an evaluation criterion of minimum required timeslot, which is determined according to actual conditions.

To sum up, the disclosure can exchange information or share internal information between non-adjacent layers and make full use of the information of each layer to coordinate the work between each layer, so as to adapt to the time-variation characteristics of a radio channel, to realize overall management and optimization configuration of resources and to enable the system to meet different requirements of various services.

The disclosure not only commits to the single target optimization of a radio network, but also solves the drawback that the traditional cross-layer design solution only emphasizes the single target optimization but neglects the overall network performance, thus avoiding the mutual conflict between multiple self-adaptive processes. The disclosure can be compromised among multiple targets, realizes multi-target optimization, and enables the overall optimization of network performances while implementing the single target optimization.

The above are only the preferred embodiments of the disclosure, and are not intended to limit the scope of protection of the disclosure.

## Claims

1. A cross-layer collaboration method for a Cognitive Radio Network (CRN), comprising:
determining a transmission quality criterion;
determining an ultimately working layer required for the transmission, and uniformly transmitting to the ultimately working layer the information of each layer required for determining transmission solutions;
selecting the transmission solutions satisfying the transmission quality criterion according to the information of each layer on the ultimately working layer; and
evaluating the selected transmission solutions, determining an optimum solution according to the evaluation result, and transmitting data on the ultimately working layer by the optimum solution.

2. The cross-layer collaboration method for a CRN according to claim 1, further comprising:
when there is only one transmission solution satisfying the transmission quality criterion, determining this transmission solution as the optimum solution;
when there are multiple transmission solutions satisfying the transmission quality criterion, evaluating the multiple transmission solutions according to a preset evaluation criterion, and selecting the transmission solution with the optimum evaluation result to transmit data.

3. The cross-layer collaboration method for a CRN according to claim 2, wherein the principle of designing the evaluation criterion is to enable the highest transmission efficiency of the entire network.

4. The cross-layer collaboration method for a CRN according to claim 1, 2 or 3, further comprising: determining the ultimately working layer required for the transmission from an Open System Interconnect (OSI) model.

5. A cross-layer collaboration system for a Cognitive Radio Network (CRN), comprising: a criterion determination module, an information uniform transmission module, a solution selection module and an evaluation transmission module, wherein
the criterion determination module is configured to determine a transmission quality criterion;
the information uniform transmission module is configured to determine an ultimately working layer required for the transmission and to uniformly transmit to the ultimately working layer the information of each layer required for determining transmission solutions;
the solution selection module is configured to select the transmission solutions satisfying the transmission quality criterion according to the information of each layer on the ultimately working layer; and
the evaluation transmission module is configured to evaluate the selected transmission solutions, to determine an optimum solution according to the evaluation result and to transmit data on the ultimately working layer by the optimum solution.

6. The cross-layer collaboration system for a CRN according to claim 5, wherein the evaluation transmission module further is configured to:
when there is only one transmission solution satisfying the transmission quality criterion, determine this transmission solution as the optimum solution;
when there are multiple transmission solutions satisfying the transmission quality criterion, evaluate the multiple transmission solutions according to a preset evaluation criterion, and select the transmission solution with the optimum evaluation result to transmit data.

7. The cross-layer collaboration system for a CRN according to claim 6, wherein the principle of designing the evaluation criterion is to enable the highest transmission efficiency of the entire network.

8. The cross-layer collaboration system for a CRN according to claim 5, 6 or 7, wherein the information uniform transmission module is further configured to determine the ultimately working layer required for the transmission from an Open System Interconnect (OSI) model.
